# EUROPEAN PATENT APPLICATION

(11) **EP 3 235 695 A1**
(43) Date of publication of application: **25.10.2017**
(21) Application number: 15870138.3
(22) Date of filing: 05.06.2015
(51) Int. Cl.: B60S 1/38

(54) **WIPER BLADE**

(30) Priority: 18.12.2014 KR 20140183026; 14.04.2015 KR 20150052142
(71) Applicant: Kimblade Co., Ltd., Suwon-si, Gyeonggi-do 441-460 (KR)
(72) Inventor: KIM, Hyung Woo, Suwon-si Gyeonggi-do 441-460 (KR)
(74) Representative: Buceta Facorro, Luis
(86) International application number: PCT/KR2015/005634
(87) International publication number: WO 2016/098970

(57) **Abstract**

The present invention is wiper blade, by balancing the opposite characteristics between the ease of operation and the cleaning force, the overall shape of the wiper blade is inclined laterally with elasticity in accordance with the moving direction of the blade mounting means for ease of operation, and the contact portion of the wiper blade for performing the cleaning is capable of maintaining an angle close to a right angle with respect to the cleaning

## Description

### FIELD OF THE INVENTION

The present invention relates generally to the wiper blade and a manufacturing method thereof, the wiper blade made of elastic material, which comprise: a mounting part(110) which is mounted at a blade mounting mean(10); an angle maintaing bendable part(120) continuously formed from the mounting part(110), and have plural longitudinal internal cavities(121); and a contacting edge(130) continuously formed from the angle maintaing bendable part(120) and contact to a cleaning surface(S) to clean the pollution(P).

### BACKGROUND ART

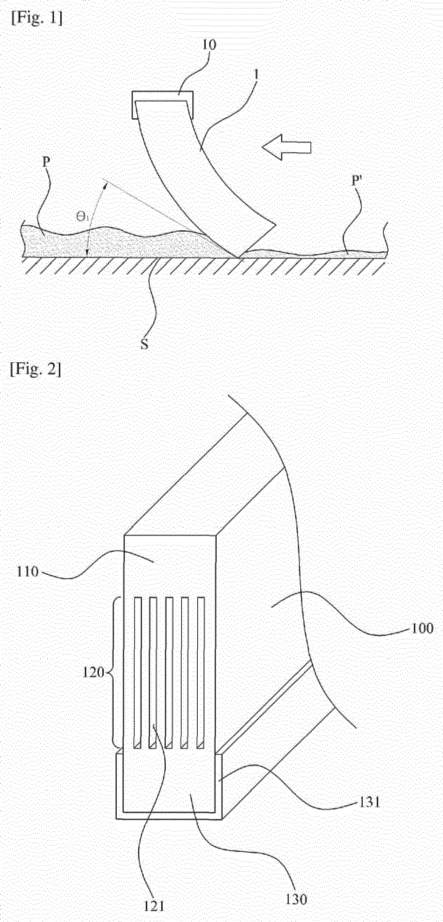

Generally as shown in Fig. 1, wiper blade 1 is mounted at blate mounting means 10 and operated to clean pollution P at the cleaning surface S.

In the operation of the wiper blade, in order to move and operate smoothly in accordance with the movement of the blade mounting means 10, it is efficient that the wiper blade has a shape such that the wiper blade inclined laterally with elasticity in accordance with the moving direction of the blade mounting means.

On the contrary to this, when the cleaning force of the wiper blade is taken into consideration, the cleaning force is excellent as the wiper blade maintains an angle close to the cleaning surface S at right angles. When the blade mounting means 10 has a relatively small angle θ1 with respect to the cleaning surface S by elasticity along the moving direction of the blade mounting means 10 as shown in FIG. 1, therefor the cleaning force is deteriorated and the residual contamination P 'remains.

Most of the existing inventions do not match the opposite characteristics between the ease of operation and the cleaning force. The prior art "Blade for automobile wiper (Korean Utility Model KR20-1998-021842A)" only discloses two blades projecting downward from the blade and connected to the windshield so as to perform direct wiping. And another prior art patent, "Wiper Blade (Korean Registered Patent KR10-0488972B)" only discloses an insertion groove formed in a longitudinal direction on the upper end of both side faces of the upper end of the wiper blade, and contacts the window of the vehicle at the lower end of the insertion groove. And the auxiliary wings are formed integrally downward on both sides of the wing at the lower portion of the wiper blade in the vehicle wiper blade in which the wings for removing are integrally formed.

In addition, since the conventional wipes clean the pollution only by the wiper blade itself, residual contaminants are liable to remain due to poor adhesion or damage to the contact portion of the wiper blade.

### Disclosure

### Technical Problem

Accordingly, in order to overcome the problems of the prior art, is an object of the present invention to provide an wiper blade, by banacing the opposite characteristics between the ease of operation and the cleaning force, the overall shape of the wiper blade is inclined laterally with elasticity in accordance with the moving direction of the blade mounting means for ease of operation , and the contact portion of the wiper blade for performing the cleaning is maintained at an angle close to the right angle, so that the wiper blade is also excellent in cleaning force.

### Technical Solution

In acoordance with an aspect of the present invention, the above object can be accomplished by providing an wiper blade made of elastic material, which comprise: a mounting part(110) which is mounted at a blade mounting mean(10); an angle maintaing bendable part(120) continuously formed from the mounting part(110), and have plural longitudinal internal cavities(121); and a contacting edge(130) continuously formed from the angle maintaing bendable part(120) and contact to a cleaning surface(S) to clean the pollution(P).

Further, in at least one embodiment, the outer surface of the contacting edge(130) has a coating layer(131).

Further, in at least one embodiment, the wiper blade further comprising: a porous sorption member(160) installed to lower part of the contacting edge(130), and the porous sorption member(160) temporarily absorb the pollution (P) and then discharge the pollution (P) again by pressing.

Further, in at least one embodiment, the porous sorption member(160) is inserted to lower part of the contacting edge(130) by a predetermined depth (d).

Further, in at least one embodiment, the hollow portion (121) is clogged with an elastic material at the end section of the wiper blade(100) to prevent intrusion of foreign materials.

### Advantageous Effects

According to the present invention, the opposite characteristics between the ease of operation and the cleaning force can be harmonized, the overall shape of the wiper blade is inclined laterally with elasticity in accordance with the moving direction of the blade mounting means for ease of operation , and the contact portion of the wiper blade for performing the cleaning is maintained at an angle close to the right angle, so that the wiper blade is also excellent in cleaning force.

In Adiition, the porous sorption member(160) temporarily absorb the residual pollution (P) and then discharge the pollution (P) again by pressing while stoping moment in order to change the working direction.

### DESCRIPTION OF DRAWINGS

Fig. 1 is a schematic view showing the problem of prior wiper blade.
Fig.2 is a sectional view of a first embodiment of present invention.
Fig. 3 is a schematic view showing the operation characteristics of the first embodiment of present invention.
Fig. 4 is a schematic view showing the contact characteristics of the first embodiment of present invention.
Fig. 5 is a schematic view showing the manufacturing process of the second embodiment of present invention.
Fig. 6 is a sectional view of a third embodiment of present invention.
Fig. 7 is a sectional view of a fourth embodiment of present invention.
Fig. 8 is a schematic view showing the operation characteristics of the fourth embodiment of present invention.

### * Description of reference numerals used in the drawings

S: cleaning surface
P: pollution
10: blade mounting mean
100: wiper blade
110: mounting part
111: clamping member
120: angle maintaing bendable part
121: internal cavity
130: contacting edge
131: coating layer
140: adhesive layer
150: elastic plate
160: porous sorption member

### BEST MODE OF THE INVENTION

Hereinafter, a wiper blade according to an embodiment of the present invention will be described in detail with reference to the accompanying drawings. First, in the drawings, it is to be noted that the same components or parts are denoted by the same reference numerals whenever possible. In the following description of the present invention, a detailed description of known functions and configurations incorporated herein will be omitted so as to avoid obscuring the subject matter of the present invention.

According to the preferred embodiment of the present invention, a wiper blade 100 is made of an elastic material and comprises a mounting part 110, an angle maintaining bendable part 120 and a contacting edge 130 as shown in FIG. 2.

As shown in Fig. 2, the mounting part 110 is mounted to the blade mounting means 10 and may be manufactured in various forms according to the structure and shape of the blade mounting means 10.

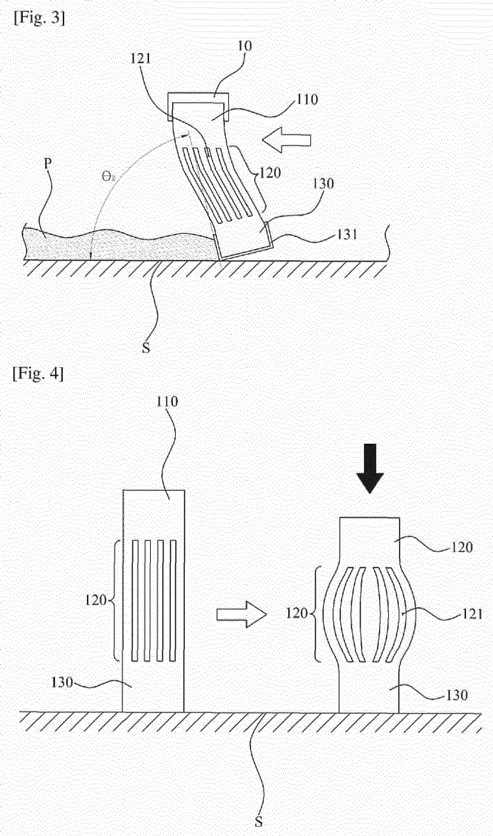

As shown in FIG. 2, the angle maintaing bendable part 120 is continuously formed from the mounting part 110, and has plural longitudinal internal cavities 121. According to the internal cavities 121, the angle maintaing bendable part 120 has a structure similar to multi 4-bar linkage structure that connects the mounting part 110 and the contacting edge 130, therefor, having adequate strength due to elasticity, the relative angle of the mounting part 110 and the contacting edge 130 is limited and relatively well maintained as shown in FIG. 3 and the overall shape of the wiper blade 100 is inclined laterally with elasticity in accordance with the moving direction of the blade mounting means 10.

On the other hand, as shown in FIG. 4, it is possible that the shape of the angle maintaing bendable part 120 changes depending on the load. Therefore, even when the cleaning surface S is not uniform, the contact edge 130 can be kept in close contact with the cleaning surface S.

In this case, the hollow portion 121 may be clogged with an elastic material at the both end section of the wiper blade 100 to prevent intrusion of foreign materials and to ensure the operation of the angle maintaing bendable part 120.

The contacting edge 130 is continuously formed from the angle maintaing bendable part 120 as shown in Fig.2, and contact to a cleaning surface(S) to clean the pollution (P). As discrived above, while angle to the mounting part(110) is well maintained, the contacting edge 130 can make a contact with the cleaning surface S with a relatively large angle θ2. Therefore, the contacting edge 130 is maintained at an angle close to the right angle to the cleaning surface S, so that the wiper blade is also excellent in cleaning force. Meanwhile, the cross section of the contacting edge 130 can be a shape of part of a polygon or a shape of double or triple blades.

As shown in Fig. 2, the outer surface of the contacting edge 130 may have the coating layer 131 to increase the strength while reducing friction. As the material of the coating layer 131, it is possible to select one of various synthetic resins or silicone. In one embodiment, it is preferable that the coating layer 131 is made of a Teflon material. The coating layer 131 may be formed by bonding a high-strength film.

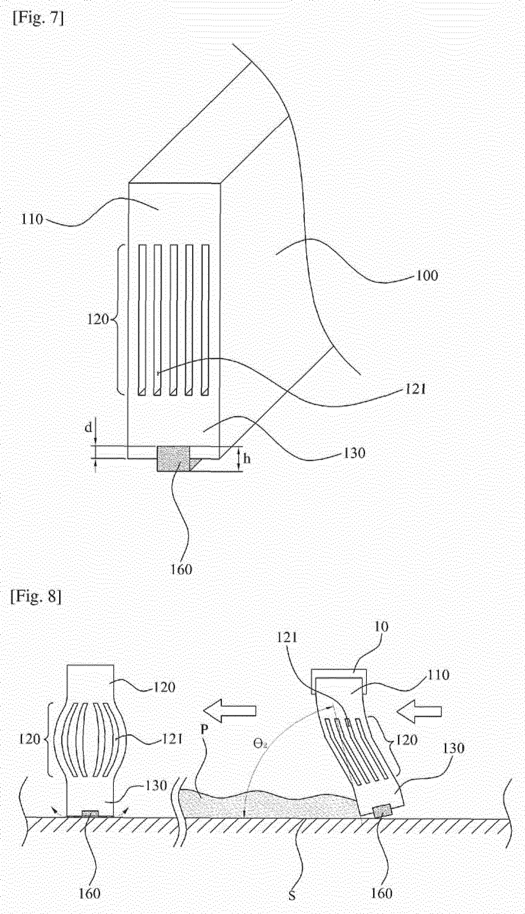

As shown in Fig. 7, the porous sorption member 160 installed to lower part of the contacting edge 130, and the porous sorption member 160 is made of porous sorption material, temporarily absorb the remaining pollution P which can not be removed by the contacting edge 130, and then discharge the pollution (P) again by pressing when the direction of operation is changing.

The porous sorption member 160 may be formed in various sizes and shapes depending on its operating characteristics. When the porous sorption member 160 is emphasized to maintain the state where the porous sorption member 160 is firmly mounted on the contact part 130, the porous sorption member 160 is inserted to lower part of the contacting edge 130 by a predetermined depth (d) as shown in FIG. 7. The predetermined depth (d) may be less than half the vertical height of the porous sorption member 160 in order to ensure a sufficient compression effect so that the pollution absorbed by the porous sorption member 160 can be efficiently discharged again by compression.

When the porous sorption member 160 focuses on the operating characteristic in order to enhance the effect of absorbing the residual pollution, the porous sorption member 160 has narrow width and a long length.

Even when the thickness of the angle maintaining bendable part 120 is relatively thick due to the configuration of the angle maintaining bendable part 120, the entire shape of the wiper blade 100 can be inclined according to the direction of movement of the blade mounting means 10, it is possible to make the thickness of the angle maintaining bendable part 120 relatively thick so that the smooth operation can be performed while the wiper blade is strongly adhered to the cleaning surface S, the pollution P can be removed more strongly..

Hereinafter, a method of manufacturing a wiper blade according to an embodiment of the present invention will be described.

The method for manufacturing a wiper blade according to an embodiment of the present invention is characterized in that the mounting part 110, the angle maintaining bendable part 120, and the contacting edge 130 are integrally extruded and then cut to a predetermined length.

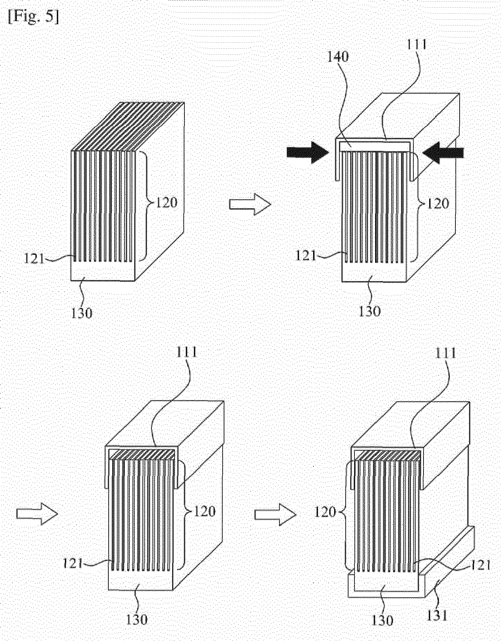

As shown in FIG. 5, the method for manufacturing a wiper blade according to the second embodiment of the present invention includes forming the hollow portion on the upper side of the integrally formed elastic block, Forming the mounting part 110 by applying an adhesive layer 140 on the upper surface of the angle maintaining bendable part and then fixing the upper surface of the mounting part 110 using a clamping member 111. In this case, it is also possible to use an extrusion process or an injection process to mold the hollow portion on the upper side of the integrally formed elastic block and to mold the angle maintaining bendable 120 formed on the contacting edge 130.

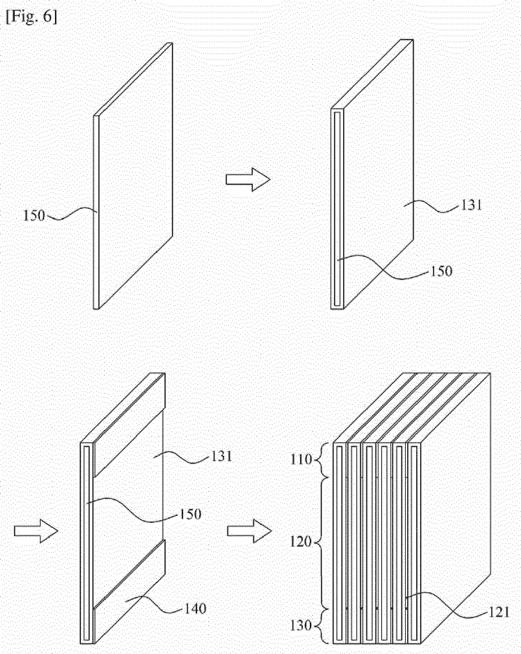

As shown in FIG. 6, the method of manufacturing a wiper blade according to a third embodiment of the present invention can be comprised: forming a coating layer 131 on the entire outer surface of an elastic 150; Forming an adhesive layer 140 on upper and lower sides of the elastic plate 150 and pressing and bonding a predetermined number of the elastic plates 150 to each other. In this case, even if the outermost elastic plate 150 and the coating layer 131 are lost due to abrasion, the elastic plate 150 and the coating layer 131 in the next layer are exposed, so the life of wiper blade can be greatly improved.

In the foregoing, optimal embodiments have been disclosed in the drawings and specification. While specific terms have been employed herein, they are used for the purpose of describing the invention only and are not used to limit the scope of the invention as defined in the claims. It will be understood by those skilled in the art that various changes in form and details may be made therein without departing from the scope of the present invention. Accordingly, the true scope of the present invention should be determined by the technical idea of the appended claims.

## Claims

1. A wiper blade(100) made of elastic material, which comprise:
a mounting part(110) which is mounted at a blade mounting mean(10);
an angle maintaining bendable part(120) continuously formed from the mounting part(110), and have plural longitudinal internal cavities(121); and
a contacting edge(130) continuously formed from the angle maintaining bendable part(120) and contact to a cleaning surface(S) to clean the pollution(P).

2. The wiper blade of claim 1, wherein the outer surface of the contacting edge(130) has a coating layer(131).

3. The wiper blade of claim 1, further comprising:
a porous sorption member(160) installed to lower part of the contacting edge(130), and the porous sorption member(160) temporarily absorb the pollution (P) and then discharge the pollution (P) again by pressing.

4. The wiper blade of claim 3, wherein the porous sorption member(160) is inserted to lower part of the contacting edge(130) by a predetermined depth (d)

5. The wiper blade according to any one of the preceding claims, wherein the hollow portion (121) is clogged with an elastic material at the end section of the wiper blade(100) to prevent intrusion of foreign materials.
